# EUROPEAN PATENT APPLICATION

(11) **EP 1 466 533 A1**
(43) Date of publication of application: **13.10.2004**
(21) Application number: 04252075.9
(22) Date of filing: 07.04.2004
(51) Int. Cl.: A23L 1/232, A22C 13/00, A23B 4/048

(54) **Liquid smoke and smoked nonfibrous casing**

(30) Priority: 08.04.2003 US 461084 P; 05.09.2003 US 500270 P; 01.04.2004 US 814220 P
(71) Applicant: Viskase Corporation, Willowbrook, Illinois 60527 (US)
(72) Inventor: DuCharme, Jr. Paul E., IL 60477, Tinley Park (US); Merritt, II Frederick M., IL 60441, Lockport (US)
(74) Representative: W.P. THOMPSON & CO.

(57) **Abstract**

A liquid smoke composition comprises a) a liquid smoke having a dilutable tar content of from greater than about 1.0 wt % to about 9.0 wt %, a pH greater than about 4.5, a Karl Fischer per cent moisture of from about 20 to about 34 wt %, a staining index of greater than about 140, b) at least one anionic surfactant, and optionally c) a wax. Non fibrous casings and methods of manufacturing nonfibrous casings containing the liquid smoke composition are disclosed.

## Description

The present invention relates to a composition of a partially neutralized liquid smoke with low to moderate tar levels, in combination with at least one anionic surfactant, and optionally a wax, to be used on nonfibrous casings. It also relates to a method for enhancing the smoky color and flavor of food products, such as sausages, by producing them in nonfibrous casing that contains the inventive composition. The distinct advantage of the liquid smoke composition treated casing lies in its inexpensive cost and the elimination of the need for large quantities of liquid smoke in the production of smoked food products.

Sausages are made by preparing a mixture or emulsion of meat, vegetables, or a mixture of the two, and stuffing it into a tubular casing. In order to get a smoky taste and color, these encased or peeled sausages are smoked with gaseous smoke during the initial cooking phase or with liquid wood smoke by dipping them into a bath of liquid smoke, by spraying them, or by drenching encased sausages with a casing permeable liquid smoke prior to thermal processing. Another way to produce smoked sausages is to use casings that have their interior surfaces treated with a liquid smoke, wherein the liquid smoke color transfers to the sausages surface during the processing cycle.

Frankfurters span a range of colors, from a very light to a much darker red, depending on the ultimate market. Sausages made of coarsely ground meat, such as polish sausages, tend to have a more intense reddish color than does the average frankfurter, but they also come in a range of colors. Each manufacturer of smoked product has its own standards for smoky color and taste. Differences in color can also be seen in products processed in casings that are sealed bags, where whole muscle meats, such as hams or chicken breasts, and cheeses, are cooked and smoked.

Food casings used in the processed food industry are generally thin-walled tubing of various diameters, typically prepared from cellulose using a number of different processes. Casings can also be made from collagen and plastics. Although the vast majority of casings are basically colorless, some do contain coloring agents which transfer to the encased foodstuff upon processing.

In general, food casings are stuffed with foodstuffs such as sausage meats or meat emulsions, and are then heat processed. If the casing contains a transferable color on its inner surface, color is transferred to the encased foodstuff during processing, thereby coloring the surface of the finished product. After processing, these casings are removed prior to final packaging. These skinless sausages are generally processed in nonfiber-reinforced ("nonfibrous") cellulose casing. The term "nonfibrous" is used here to mean without use of fiber reinforcement (e.g., a paper tube) in the casing and nonfibrous is most commonly understood in the art to refer to casings without paper or a previously bonded fiber reinforcement. Nonfibrous casings are typically used to process small diameter sausages including polish sausages, wieners, or frankfurters.

In one well known method of manufacturing of nonfibrous, self-coloring cellulose casings, viscose is typically extruded through an annular die into a coagulating and regenerating bath to produce a tube of regenerated cellulose. In another method, cellulose is dissolved by a tertiary amine oxide and later, the dissolved cellulose is precipitated to form a film or filament, as described in US patent 2,179,181. This cellulose tube is subsequently washed, plasticized, e.g., with glycerine, is impregnated with a water-soluble, casing-permeable colorant, and then dried by inflation under substantial air pressure. After drying, the self-coloring nonfibrous casing is wound on reels and subsequently shirred on high-speed shirring machines, such as those described in US Patents 2,984,574; 3,451,827; 3,454,981; 3,454,982; 3,461,484; 3,988,804 and 4,818,551. In the shirring process, typically lengths of from about 12m (40 feet) to about 70m or more (200 or more feet) of casing are compacted (shirred) into tubular sticks of between about 10cm (4 inches) and about 76cm (30 inches). These shirred casing sticks are packaged and provided to the meat processor who typically causes the casing sticks to be deshirred at extremely high speeds while stuffing the deshirred casing with a meat emulsion. The meat can be subsequently cooked or pasteurized and the casing removed from the meat processed therein with high-speed peeling machines. When color impregnated casing is used, the resulting peeled sausage is colored by the colorants, such as FD&C dyes, that have transferred from the casing to the surface of the sausage during cooking or pasteurization.

Colorless nonfibrous casings are made in a similar fashion, but without the color additive steps. Smoked foodstuffs may be produced using the clear casings by exposing either the encased or released foodstuff to a liquid smoke solution by drenching, spraying or showering the liquid smoke on the encased or released foodstuff.

In the case of fibrous casing, a process of manufacture similar to that for nonfibrous casing is employed. The viscose is extruded onto one or both sides of a tube formed by folding a web of paper so that the opposing side edges overlap. The viscose impregnates the paper tube and upon coagulation and regeneration of the viscose, a fiber-reinforced tube of regenerated cellulose is produced. Liquid smoke or other colorants and/or flavorants may be introduced to the fibrous casing generally by slugging, spraying, drenching or dipping. Fibrous casing is able to absorb much greater amounts of colorants and/or flavorants than is nonfibrous casing, due to the additional reinforcing material used in the casing. These colorants or flavorants then transfer to the surface of the product prepared inside the fibrous casing.

In the case of some products produced inside fibrous casing, the casing is removed after processing. However, larger diameter sausages such as salami are frequently sold with the casing left on.

Production of both nonfibrous and fibrous casing is well-known in the art and the present invention may utilize such well known processes and casings.

Cellulosic casings are typically humidified to a level sufficient to allow the casing to be shirred without undue breakage from brittleness, yet humidification must be at a level low enough to prevent undue sticking of the casing to the shirring equipment, e.g., the mandrel, during the shirring operation. Often a humectant is employed to moderate the rate of moisture take-up and casing swelling, to produce a casing that during the shirring operation has sufficient flexibility without undue swelling or stickiness. Typically, a lubricant such as an oil will also be used to facilitate passage of the casing through the shirring equipment, e.g. over a shirring mandrel.

It has been useful to lubricate and internally humidify cellulose casings during the shirring process by spraying a mist of water and a stream of lubricant through the shirring mandrel. This is an economical, fast and convenient way to lubricate and/or humidify the casing to increase the flexibility of the casing and facilitate high speed shirring without undue detrimental sticking, tearing, or breaking of the casing. Additional components, such as coloring agents, liquid smoke, peeling aids, etc., may also be added to the shirring solution, and thereby introduced into the interior of the casing.

In the formation of cellulosic casing an extruded cellulosic film forms what is known as gel stock casing having a high moisture content in excess of 100 wt.%. This gel stock casing is unsuitable for stuffing with food such as a meat emulsion, e.g. to form sausages, because it has insufficient strength to maintain control of stuffing diameter and prevent casing failure due to bursting while under normal stuffing pressure. Gel stock casing is typically dried to a moisture level well below 100 wt. %, which causes the cellulose to become more dense with increased intermolecular bonding (increased hydrogen bonding). The moisture level of this dried casing may be adjusted, e.g., by remoisturization, to facilitate stuffing.

In the formation of skinless frankfurters where the casing is removed after processing, sausage proteins coagulate, particularly at the sausage surface, to produce a skin and allow formation of a liquid layer between this formed skin and the casing, as described in US Patent 1,631,723 (Freund). In the art, the term "skinless frankfurter" is understood to mean that the casing is or is intended to be removed and that such casing may be removed because of formation of a secondary "skin" of coagulated proteins on the surface of the frankfurter. This secondary skin forms the outer surface of the skinless frankfurters. Skin formation is also known to be produced by various means including the traditional smoke curing with gaseous smoke, low temperature drying, and application of acids such as citric acid, acetic acid or acidic liquid smoke or combinations thereof. Desirably, this secondary skin will be smooth and cover the surface of the frankfurter. Formation of a liquid layer between the casing and the frankfurter skin facilitates peeling and relates to the meat emulsion formulation, percent relative humidity during the cooking environment, subsequent showering, and steam application to the chilled frankfurter.

Also, application of certain types of coatings to the inside wall of food casings may improve the release characteristics of the casing from the encased sausage product. Use of peeling aids or release coatings has helped to overcome peelability problems associated with process variables. Following cooking, cooling and hydrating, peeling aids such as water-soluble cellulose ethers, waxes, or wax mixtures containing small amounts of surfactants, help release the casing from the frankfurter skin by formation of a peeling enhancing layer between the casing and the frankfurter skin. See US patents 3,898,348 and 4,137,947 for further examples.

These peeling aids have been used with varying degrees of success to provide cellulosic casings capable of being peeled on high speed machine peelers. Generally such cellulosic casings either with or without peeling aid coatings have an approximately neutral pH with pH values typically falling within a range of about 5.9 to about 8.6.

Use of various transferable colorants on food packaging, including cellulosic casing, has been known for some time. Self-coloring casings are disclosed in US Patents 2,477,767; 2,477,768 and 2,521,101. These casings are designed to transfer color to the sausage surface. Such casings are generally either coated or impregnated with food grade water-soluble dyes. Also, liquid smoke impregnated fibrous casings are known to transfer liquid smoke to the surface of sausages encased therein, transferring a flavorant or colorant and also causing a browning reaction on the sausage surface.

U.S. Patents 2,477,767 and 2,477,768 disclose regenerated cellulose sausage casings uniformly treated with a transferable, edible natural coloring matter, such as annatto. The colorant may be applied with glycerine and/or other polyhydric alcohols or vegetable oil. Orange to orange-red sausages are made using self-coloring casings dyed with synthetic colorants such as coal tar dyes that have been approved by government regulation for use on food. These dyes, which are typically known as FD&C dyes, are typically applied to cellulosic casings by dipping gel stock casing into a tank containing an aqueous mixture of glycerine and the FD&C dyes.

Another colorant well known in the art is liquid smoke. Liquid smoke solutions are available in a number of formulations. Previously, standard liquid smoke solutions were known as "as-is" solutions, where the liquid smokes were generally highly acidic within a pH range of about 2.0 to about 2.5, having a titratable acidity of at least 3 and as high as 16 wt.%, and also contained tar-like components. When used to treat casings, the tar content of the liquid smokes caused sticky deposits to accumulate on equipment used to perform the treatment. It is well known that at certain levels of dilution with water, the tars in liquid smoke would "shock out" or precipitate out of solution, leaving the sticky tars at the bottom of the solution. The acidity of the liquid smoke also interfered with the peelability of the nonfibrous casing by interfering with the action of the peeling aid used, such as carboxymethyl cellulose. When the acidic, tar-containing smokes were coated on the interior of nonfibrous casings, over time, the low pH liquid smoke also caused the cellulose to degrade, resulting in pinholes and such in the casing itself. In addition, iron contamination caused dark spots on the processed sausages, which were unacceptable to the consumer. And when the casing was shirred, these "shocked-out" tars migrated to the folds of the shirred casing. Any product produced using this casing would have a 'pleat pattern' on its surface - unacceptable when an evenly colored surface was wanted.

It was found that tar could be removed from the liquid smoke by neutralizing the "as is" smoke to precipitate the tar and filtering resulting solids. Another way of accomplishing this is through solvent extraction. Adding polysorbate to tar-containing liquid smoke solubilizes tars and allows the liquid smoke to be diluted with water thereby eliminating the shock-out problem and producing a commercially useful product. Both of these methods of producing tar depleted liquid smokes eliminated the tarry deposit accumulation problem. Further treatment of the casings containing liquid smoke with sodium dihydrogen phosphate is often used to prevent black spotting on the enclosed foodstuffs caused by the iron contamination. Even partial neutralization of the liquid smoke reduces the cellulose degradation problem, and allows the peeling agents to perform as intended, as described in US Patent 4,540,613. Disadvantages of these tar-depleted liquid smokes is that the color produced is not as satisfactory as that seen with tar containing smokes and that they are very expensive to use. As of this date, tar-depleted smokes are not in use by any large casing manufacturer to produce a nonfibrous smoked casing.

However, because many sausage manufacturers prefer to have a darker colored sausage than that obtainable by processing the meat, meat emulsion, vegetable mixture, or cheese in casing impregnated with liquid smoke, they prefer to stuff clear casing with the foodstuff and later drench the stuffed casing, or the released foodstuff, in liquid smoke. This results in a darker foodstuff However, there are also disadvantages. One is additional cost, due to the large amounts of liquid smoke needed for drenching. Another is that the liquid smoke solutions generally reduce product yield because of the large amount of salt in the drenching solution, which extracts water from the meat or meat emulsions. The extracted water dilutes the smoke, which then requires the addition of even more liquid smoke to the solution, thereby driving up the total cost of production. Another disadvantage is that the equipment used for providing the liquid smoke for drenching needs to be thoroughly cleaned to remove tar deposits from it on a regular basis, which can be once a day, again at additional cost. Drenching is also an additional step in processing, slowing down production rates and thereby increasing the cost of the final product.

Fibrous casings are casings that are well known in the art to be amenable for impregnation with liquid smoke. Because they are fibrous reinforced casings, they can be coated with acidic liquid smoke containing low levels of tars or basic liquid smokes with high levels of tars. Often these casings are not shirred, but sold as unshirred, or 'cut' stock. But when these bulkier casings are shirred, the pleats formed are not as tight as the nonfibrous casings, and the pleat patterns on the processed foodstuffs, such as hams, are not as noticeable as they are on hot dogs made in nonfibrous casings. Additionally, the pin holing and other damage to the casing does not occur, due to the reinforced nature of the fibrous casing. However, fibrous casing is not the casing of choice in the production of many sausages and other foodstuffs when the casing must be removed after processing.

The present invention seeks to provide a liquid smoke solution that contains low to moderate amounts of tars which remain in solution, even after being introduced onto a nonfibrous casing.

Further, this invention seeks to provide a method of producing nonfibrous casings containing a liquid smoke composition, which coating transfers flavor and taste to foodstuffs encased and processed within.

The present invention also seeks to provide a method of producing sausages and other foodstuffs in nonfibrous casings having good smoky flavor and an acceptable smoky color, without the need for using wasteful and expensive amounts of liquid smoke.

The present invention provides the liquid smoke composition of claim 1, the method of manufacturing nonfibrous casing of claim 6 and the casing of claims 8 and 10. The dependent claims specify preferred but optional features.

The present invention provides a composition and a method of ultimately producing a smoky tasting colored foodstuff, such as a sausage, made in a manner that is well known to the industry, but at a reduced cost. A liquid smoke containing low to moderate amounts of tar, that is less expensive than currently available tar depleted liquid smokes, in combination with at least one anionic surfactant, and optionally a wax component, is applied to nonfibrous casing, which can then be shirred, while maintaining a uniform application of the liquid smoke composition on the casing, thereby producing a liquid smoke impregnated nonfibrous casing. This inventive casing is used to manufacture smoky flavored and colored foodstuffs without the need to use large volumes of liquid smoke to drench encased product, and at a reduced cost.

In particular, the present invention is a liquid smoke composition of a partially neutralized liquid smoke having a low to moderate soluble tar level, and at least one anionic surfactant with or without a wax, in combination with a standard shirring solution, that is able to withstand some water dilution, without shocking the tars out of solution. This inventive liquid smoke composition has characteristics that allow it to be used as part of a solution which is applied to the interior of nonfibrous cellulosic casings, collagen casings, and also to casings of plastics or nylons. This composition may also be used in multilayer casings wherein the outer layer (non-food contacting surface) is a nylon or plastic, with the interior surface being cellulosic, or where the interior layer is made of a plastic or nylon capable of retaining a coating of the liquid smoke composition, while the outer layer is cellulosic. Preferably, the inner nylon or plastic layer in a multilayer casing, or if used as a monolayer casing, will be of a type of nylon or plastic that is porous and able of retaining the liquid smoke composition

Characteristics of the inventive liquid smoke include a dilutable tar content of from greater than about 1.0 to about 9.0 weight % ("wt %"), and preferably from about 2.9 to about 5 wt. %; a pH greater than about 4.5, preferably from about 5.0 to about 6, with the most preferred from about 5.0 to about 5.4; a Karl Fischer per cent moisture of from about 20 to about 34 wt %; and a staining index of greater than 140, preferably greater than 200. It has been found that a liquid smoke having these characteristics, when used as a component of a shirring solution applied to the interior of a nonfibrous casing, produces a shirred casing that is free of tar deposits, particularly in the pleats, and that can be used with standard peeling aids which allow the casing to be easily removed from the encased foodstuff. This type of liquid smoke is much less expensive than a tar-free smoke, which is prohibitively expensive in the commercial production of casing.

The surfactant component of the liquid smoke composition is preferably at least one anionic surfactant, such as, but not limited to, sodium lauryl sulfate ("SLS") or dodecyl benzene sulfonate ("DDBSA"). More preferably, at least two anionic surfactants are used in the inventive composition. Anionic surfactants are well-known in the art, and with a reasonable level of experimentation, the exact type and amount of such surfactant(s) will be readily discovered by one who is skilled in the art.

The wax and surfactant mixture portion of the liquid smoke composition can be a wax, such as camauba wax with enough surfactant to stabilize the wax dispersion in aqueous systems. These are well-known, commercial products, such as a product known as Slip-Ayd SL525E, manufactured by Elementis, of Hightown, New Jersey, USA and AS35-3, manufactured by Chemcor, of Chester, New York, USA, which has at least two anionic surfactants blended with carnauba wax, such as sodium lauryl sulfate, dodecylbenzene sulfuric acid, and morpholine neutralized oleic acid.

Another aspect of the invention is a method of manufacturing nonfibrous casing, wherein the casing is made from a viscose solution that is extruded as a tube into coagulation and regenerating baths, thereby producing a cellulosic tube in a gel state, which gel tube is further treated with humectant and dried, the improvement comprising coating the interior of the casing with a composition of liquid smoke having a dilutable tar content of from greater than about 1.0 wt % to about 9.0 wt %, and preferably from about 2.9 to about 5 wt.%; a pH greater than about 4.5, preferably from about 5.0 to about 6, with the most preferred from about 5.0 to about 5.4; a Karl Fischer per cent moisture of from about 20 to about 34 wt %; a staining index of greater than 140, preferably greater than 200 and at least one anionic surfactant and optionally a wax. The at least one anionic surfactant and a wax may be obtained from a mixture of a wax containing surfactant, such as Slip-Ayd manufactured by Elementis. This casing may then be shirred into stick form for ease of handling.

The cellulosic casing described above may be made using other methods, such as through dissolution with an amine oxide. In these cases, the tubular casing is formed as is well known in the art (US Patent 5,451,364), and prior to shirring or packaging the casing, it is coated with the inventive liquid smoke system. The casing may also have an inner surface made of nylon or plastic. Preferably the nylon or plastic will be porous and thereby able to retain a coating of the invention liquid smoke composition.

Additionally, the present invention is a nonfibrous casing, preferably of cellulose, but may also be made of collagen, plastics or nylon, that has had applied to the interior surface a liquid smoke composition having a dilutable tar content of greater than about 1.0 wt % to about 9 wt %, and preferably from about 2.9 to about 5 wt.%; a pH greater than about 4.5, preferably from about 5.0 to about 6, with the most preferred from about 5.0 to about 5.4; a Karl Fischer per cent moisture of from about 20 to about 34 wt %; a staining index of greater than 140, preferably greater than 200 and at least one anionic surfactant and optionally, a wax, or a mixture of a wax containing surfactant, such as Elementis' Slip-Ayd. This casing may then be shirred into stick form for ease of handling.

Additionally, the present invention is a method of producing smoky colored and flavored food products, wherein nonfibrous cellulosic or plastic or nylon casing as described above is stuffed with the desired food product, thereby producing a stuffed casing, and processing the treated stuffed casing thermally to cook said food product, the improving comprising: coating the nonfibrous casing with the inventive liquid smoke solution.

The resulting food product, such as a sausage, will have a smoky color and flavor acceptable to the ultimate consumer made at a cost acceptable to the manufacturer. This coloring and flavor is similar to those seen in foodstuffs processed by the standard methods well known in the art where the liquid smoke is drenched or sprayed on the outside of the stuffed casing.

The preferred casing to be used may additionally contain peeling aids, if it is desired that the casing be removed from the cooked foodstuff. One embodiment of the invention provides nonfibrous casings in the form of bags or pouches that have an internal coating of the inventive liquid smoke, and that are used to encase whole muscle meats, such as hams, beef, chickens, chicken parts, veal and pork. Such encased meats are then cooked, resulting in a smoky color and flavor when the casing is removed.

The present invention is a composition of a partially neutralized liquid smoke with a low to moderate soluble tar level, in combination with at least one anionic surfactant with or without a wax component, that is able to withstand some water dilution without shocking the tars out of solution. The inventive liquid smoke composition has characteristics that allow it to be used as part of a solution or as the sole composition applied to the interior of nonfibrous cellulosic casings, collagen casings, and in plastic casings. It may also be applied on casings made of porous material on the external surface of the casing, where it will migrate throughout the whole casing. The characteristics of the inventive liquid smoke include a dilutable tar content of from greater than about 1.0 to about 9 wt %, and preferably from about 2.9 to about 5 wt.%; a pH greater than about 4.5, preferably from about 5.0 to about 6, with the most preferred from about 5.0 to about 5.4; a Karl Fischer per cent moisture of from about 20 to about 34 wt %; and a staining index of greater than 140, preferably greater than 200.

It has been found that a liquid smoke having these characteristics, when used as a component of a coating on the interior of a nonfibrous casing, produces a shirred casing that is free of tar deposits, particularly in the pleats, can be used with standard peeling aids which allow the casing to be easily removed from the encased foodstuff, and is much less expensive than a tar-free smoke, which is prohibitively expensive for commercial manufacturers to use in the production of casing.

The surfactant component of the liquid smoke composition is preferably at least one anionic surfactant, such as, but not limited to, sodium lauryl sulfate ("SLS") or dodecyl benzene sulfonate ("DDBSA") or its sodium salt. More preferably, at least two anionic surfactants are used in the inventive composition. Anionic surfactants are well-known in the art, and with a reasonable level of experimentation, the exact type and amount of such surfactant(s) will be readily discovered by one who is skilled in the art.

Optionally, a wax and surfactant component may be used in the inventive liquid smoke composition. A commercially available standard wax product, an example of which is the Elementis product known as Slip-Ayd SL535E. Another such product is Chemcor's AS35-3. It is believed that these are a mixture of at least two anionic surfactants blended with carnauba wax. It is hypothesized that these properties react with the tars in solution similarly to the way they are believed to interact with the wax, forming linked micelles, thereby keeping the tars in solution. When water alone was combined with the inventive liquid smoke, tars were seen to precipitate out of solution, whereas when using the wax/surfactant product and water or surfactant additions and water, precipitation of the tars was not seen.

Another aspect of the invention is a method of manufacturing nonfibrous casing, wherein the casing is made from a viscose solution that is extruded as a tube through a die into coagulation and regenerating baths, thereby producing a cellulosic tube in a gel state, which gel tube is further treated with humectant and dried, the improvement comprising coating the interior of the casing with a solution of liquid smoke having a dilutable tar content of greater than about 1.0 wt % to about 9.0 wt %, and preferably from about 2.9 to about 5 wt. %; a pH greater than about 4.5, preferably from about 5.0 to about 6, with the most preferred from about 5.0 to about 4; a Karl Fischer per cent moisture of from about 20 to about 34 wt %; a staining index of greater than 140, preferably greater than 200 and a mixture of a wax containing surfactant, such as Slip-Ayd manufactured by Elementis or of at least one anionic surfactant. This casing may then be shirred into stick form for ease of handling.

The cellulosic casing described above may be made using other methods, such as through dissolution with an amine oxide. In these cases, the tubular casing is formed as is well known in the art (US Patent 5,451,364), and prior to shirring or packaging the casing, the inventive liquid smoke system is applied so that the inventive liquid smoke is able to transfer to any encased foodstuff on processing. The casing may also be multilayer and have an inner surface made of nylon or plastic, or the whole monolayer casing may be made of nylon or plastic. The nylon or plastic material must be of a type that is able to retain the inventive liquid smoke composition on the inner surface of the casing.

The inventive process is particularly useful with small diameter casings, and even more particularly as tubular nonfibrous casings that are used for processing foodstuffs, such as sausages made of emulsified or coarsely ground meat. It is also useful in casings that are larger bags or pouches used to surround whole muscle meat products, such as hams, beef, chickens or chicken parts, veal, and pork, which are then processed in the casings. After cooking, encased links may be mechanically peeled off and the surface of the link is uniformly flavored and colored with a dark, smoky color. In addition, the dark, smoky coloring given by the liquid smoke containing nonfibrous casing is imparted from the casing to the enclosed foodstuff in approximately the same amount of processing time needed to process links with high speed machinery using "as is" acidic liquid smoke or any of the other commercially used liquid smokes.

Additionally, the present invention is a nonfibrous casing, preferably of cellulose, but may also be of collagen, plastics, or nylon, that has an interior coating of a liquid smoke solution having a dilutable tar content of greater than about 1.0 wt % to about 9.0 wt %, and preferably from about 2.9 to about 5 wt. %; a pH greater than about 4.5, preferably from about 5.0 to about 6, with the most preferred from about 5.0 to about 5.4; a Karl Fischer per cent moisture of from about 20 to about 34 wt %; a staining index of greater than 140, preferably greater than 200 and at least one anionic surfactant, and optionally, a wax. The surfactant and wax may be introduced a mixture of a wax containing surfactant, such as Slip-Ayd manufactured by Elementis or of. This casing may then be shirred into stick form for ease of handling.

The food casings of the present invention may be prepared from tubular casings, particularly non-fibrous casings of cellulose, e.g., regenerated or dissolved cellulose. Some of the well-known methods of producing these casings are the well known 'viscose' process and 'amine oxide' processes. See, for example, US Patent 5,451,364. Casings may be made of any suitable cellulosic material including large or small diameter, and seamless or seamed tubular films, as are well-known in the art. In addition, casings that are permeable or semi-permeable, such as those made from plastics or polyamides or any combination thereof, will be useable in this invention.

As the term is used herein, "casings" may be planar or tubular nonfibrous films, or may be in the form of pouches or bags. The casings may be wrapped around a foodstuff by any of the well known means in the art.

The manufacture of such casings is well known in the art and one of ordinary skill is aware of the common variations in such parameters as moisture content, type and amounts of such additives as plasticizers, antimycotics, etc. Tubular casings are typically gathered into shirred sticks using well known processes and equipment. During the shirring operation it is common to apply to the casing, particularly to the inner surface of a tubular casing, by spraying a composition termed a 'shirr' solution that may contain such ingredients as an anti-pleat lock agent, a lubricant, a surfactant, water and/or a humectant. Some components may serve multiple functions, for example, when lecithin or mineral oil is used, these materials may act as anti-pleat lock agents and as lubricants to facilitate travel of the casing over a shirring mandrel or stuffing horn. Application with a shirr solution is done to facilitate shirring of the casing and form easily deshirrable, self-sustaining sticks of shirred casing that are adapted for stuffing with products, particularly emulsions that form sausages.

In fibrous casings, liquid smoke having a pH of from about 4.0 to about 12.5 is sprayed on the inner surface of the casing, preferably as part of a shirring spray solution.

Applying solutions to casings also may be done by other well-known means such as slugging, which is common in fibrous, large diameter casings.
Application of other additives and compositions via solution spraying is convenient, economical and facilitates placement of a regular measured distribution of the desired composition on the casing surface. For example, peeling aids such as carboxymethyl cellulose ("CMC") may be added in the shirr spray as is taught in the art. Nonfibrous casings useful in the present invention and well known in the art are manufactured by Viskase Corporation, located in Willowbrook, Illinois, USA, and known as the NOJAX® and EZ PEEL® , and Hydroflex® brands of small diameter casings.

Beneficially, additional components that may be added to the shirring or application solution used on the casing include well-known ingredients such as: an antioxidant color stabilizer such as a tocopherol, ascorbate, or sodium erythorbate; glycerine, propylene glycol, or oils, such as vegetable oil, added to promote spreading of the coloring on the casing surface and enhance uniformity of color transfer to the sausage surface; surfactants such as lecithin, polysorbates including polyoxyethylene (20) sorbitan monolaurate, or ethoxylated monodiglycerides may be employed to facilitate uniformity, spreadability, and/or transferability of the inventive liquid smoke system from the casing to the encased foodstuff.

The preferred coating composition of this invention is a combination of the inventive liquid smoke composition, shirring solution, and optionally peeling aids, and is applied in one step, instead of in multiple steps or layers.

The amount of this preferred coating composition applied to the nonfibrous casing will typically be from about 70mg to about 170mg of coating/100cm² of casing surface (about 450 to about 1,100 mg. of coating/100 in² of casing surface). In comparison, fibrous casing can hold almost 620mg coating/100cm² (4,000 mg coating/100in²). The coating may be applied during shirring as a spray. Alternatively, the liquid smoke containing coatings may be applied to gel stock casing by slugging, dipping, or coating prior to drying, or by slugging semi-finished casing after drying and prior to shirring. Slugging or a combination of slugging and spraying may enhance uniformity of the coating on the casing during shirring.

In general, tubular casings of the present invention will contain sufficient liquid smoke to color the foodstuff surface uniformly and to a visually perceptible color intensity. Such intensity will vary according to customer tastes in the marketplace. Suitable concentrations of liquid smoke will depend on the preferences of the customer, but concentrations of the inventive liquid smoke on the inner surface of the casing at a concentration of from about 93 to about 140mg/cm² of casing surface (about 600 to about 900 mg/in² of casing surface) are preferred. Shirring solutions having lesser amounts of the inventive liquid smoke system will produce decreased color intensity, while greater amounts will produce a more intense color. Generally, the amount of liquid smoke used in the casing will be in the range of about 75 wt.% of the shirring solution, with a preferred composition of the invention having at least 50 wt.% and less than about 90 wt.%.

Another factor known to be especially important in affecting the suitability of shirred casing sticks for use with automatic food stuffing equipment is the durability or coherency of the shirred stick as a self-sustaining article. A disjunction or break in the shirred stick prior to mounting on the stuffing apparatus may make the stick unsuitable for use. Accordingly, any treatment such as the application of a coating to a tubular food casing that is to be formed into shirred casing sticks must be considered in light of its effect on coherency. Advantageously, such coatings will assist in formation of shirred sticks of casing which have sufficient coherency to hold together from immediately after shirring through shipping and ultimate use, while allowing the shirred casing to be easily deshirred during stuffing operations without production of casing defects such as holes or tearing and without requiring undue force thereby minimizing such defects.

The following examples are intended to illustrate the various facets of the present invention. All percentages are weight % unless identified otherwise.

### Example 1. - Tar-Out of Liquid Smoke in Water

This example illustrates the precipitation of tars from the liquid smoke solution of the present invention when mixed with water or with a know tar stabilizer, propylene glycol ("PG").

**Table 1 -**

| Tar-out | | | |
|---|---|---|---|
| | % Added (1) | % Water (2) | Tar-out |
| Water | 0 | 31.8 | none |
| | 10 | 38.6 | light |
| | 15 | 42.0 | medium |
| | 20 | 45.4 | medium heavy |
| | 25 | 48.9 | heavy |
| | | | |
| PG | 10 | 28.6 | none |
| | 15 | 27.0 | none |
| | 20 | 25.4 | none |
| | 25 | 23.9 | none |

| | | | |
|---|---|---|---|
| (1) Weight % water or PG added to existing smoke containing 31.8 wt % water | | | |
| (2) Weight % water in final water/smoke mixture | | | |

A sample of liquid smoke was weighed out and added to a known amount of water or PG with minimal stirring to observe tar-out tendency. The % Added column indicates amount of water or PG added to a known weight of smoke. The % Water column indicates amount of water in the final mix (including water present in the smoke to begin with).

This experiment shows that this smoke is susceptible to tar formation upon increasing water content if some sort of stabilization system is not present. The PG shows a reduced amount of total solution water and also shows that PG does not cause tar-out.

### Example 2. - Surfactant and Wax Stability

A number of internal shirring solutions ("ISS") were made based on the composition seen below in Table 2 - Standard ISS Solution, and altered as shown in Table 3.

**Table 2 -**

| Standard ISS Solution | | |
|---|---|---|
| Ingredients | mg/100 in² ** | wt % |
| | | |
| DI Water | 123.75 | 13.75 |
| Liquid Smoke* | 749.25 | 83.26 |
| Carboxymethyl cellulose 7LF | 5.04 | 0.56 |
| Sodium dihydrogen phosphate monohydrate | 2.7 | 0.30 |
| sodium erythorbate monohydrate | 0.9 | 0.10 |
| Slip Ayd SL535E | 17.37 | 1.93 |
| Tween 80 | 0.9 | 0.10 |
| Total | 899.91 | 100.0 |

| | | |
|---|---|---|
| *Falls within the parameters of the inventive liquid smoke | | |
| ** 1mg/100in² = 0.155mg/100cm² | | |

This experiment shows the effect of adding Slip Ayd to an ISS instead of just water or water/PG in terms of stabilization of the ISS against tarring-out and separation of the solid wax phase of the Slip Ayd itself.

**Table 3 -**

| Surfactant and Wax Stability (Modified Standard ISS Solution) | | | | |
|---|---|---|---|---|
| Sample | Ingredients | | Tar-out | 3 day % Separation |
| | Water | Slip Ayd* | | |
| | | | | |
| Water Control (1) | 42.27 | 0% | heavy | n.a. |
| Water/PG Control (2) | 41.3 | 0% | heavy | n.a. |
| Std | 41.7 | 100% | no | 50% |
| A | 42.2 | 50% | no | 75 |
| A2 (3) | 40.71 | 50% | no | 84 |
| C | 42.2 | 150% | no | 1.9 |
| C2 | 40.71 | 150% | no | 3.6 |
| B | 44.2 | 50% | yes | 76.7 |
| B2 (3) | 42.67 | 50% | little | 79.6 |
| D | 44.2 | 150% | no | 3.1 |
| D2 | 42.64 | 150% | no | 41.9 |

| | | | | |
|---|---|---|---|---|
| * = % of Slip Ayd in Standard ISS solution. | | | | |
| (1) Same formula as Std except Slip Ayd replaced by water | | | | |
| (2) Same formula as Std except Slip Ayd replaced by 50% PG in water | | | | |
| (3) Slip Ayd sticks to sides of bottle above liquid and some dark spaces; more dark specs in B2 than A2. All other bottles clean above liquid level. | | | | |

This experiment showed that (1) increased water content in the ISS at low level of Slip Ayd produced some tar formation, and that this is not seen at higher concentrations of Slip Ayd; and (2) increased Slip Ayd concentration increases the stability of the carnauba wax solids, reducing the amount of separation (floating to top) with time.

### Example 3. - Surfactants Alone.

This experiment is similar to Experiment 2, but using varying amounts of surfactants, either alone or together, without the presence of a wax component.

**Table 4 -**

| Matrix of ISS Water Levels and Varying Amounts of SLS and DDBSA | | | | |
|---|---|---|---|---|
| Sample | Water | SLS (1) | DDBSA (2) | Output tar-out(3) |
| 1 | 43.1 | 0 | 1 | 0 |
| 2 | 42.6 | 1 | 0.5 | 0 |
| 3 | 42.6 | 0.5 | 1 | 0 |
| 4 | 42.93 | 0.46 | 0.71 | 0 |
| 5 | 44 | 0.1 | 0 | 0.58 |
| 6 | 42.1 | 1 | 1 | 0 |
| 7 | 44 | 0.1 | 0 | 0.72 |
| 8 | 42.1 | 1 | 1 | 0 |
| 9 | 43.55 | 0.55 | 0 | 0.38 |
| 10 | 43.1 | 1 | 0 | 0.26 |
| 11 | 43.1 | 0 | 1 | 0 |
| 12 | 43.1 | 1 | 0 | 0 |
| 13 | 43.55 | 0 | 0.55 | 0 |
| 14 | 43.26 | 0.42 | 0.42 | 0 |

| | | | | |
|---|---|---|---|---|
| (1) about 30% by weight contained | | | | |
| (2) about 90% by weight contained | | | | |
| (3) wt% tar-out = 0.01561* water - 0.6219*SLS + 29.7968* DDBSA -0.7078* water*DDBSA r² = 0.9266 | | | | |

This experiment shows that the wax, as found in Slip Ayd, is not necessary to stabilize the smoke against tar-out on the addition of water. Both SLS and DDBSA stabilize the tar-out to some degree, tar-out only being seen at the lower tested levels. The ISS foams on shaking and mixing due to the presence of the surfactants.

Each surfactant is effective individually, with the DDBSA indicated to be the most effective by itself, and both together make very efficacious solutions.

The highest water level with no tars is 43.55% here which is significantly above the target 41.7% water level where tar-out occurs without Slip Ayd or these surfactants.

### Example 4. - Anionic Surfactant Concentrations.

ISS was made as above (Ex. 2), but with varying the concentration of liquid smoke and water, as shown in the table below. Three levels of surfactant were tested to determine the concentrations needed to stabilize against tar-out.

**Table 5 -**

| Mixed Surfactant Concentrations | | | |
|---|---|---|---|
| Surfactant Level (1) | Water Level (2) | Sample Appearance | Several Days Standing |
| (wt% of ISS) | | Initial | |
| 0 | 41.7 % water | some haze | still haze with tar specs on bottom and sides |
| | | | |
| 0.5 | 41.7% water | clear & clean | clear & clean |
| 0.5 | 42.7% water | clear & clean | clear & clean |
| 0.5 | 43.7% water | clear & clean | clear & clean |
| 0.5 | 44.7% water | clear & clean | clear & clean |
| | | | |
| 0.5 | 45.7% water | clear & clean | clear with small amount of tar specs around outside rim of bottom |
| | | | |
| 0.5 | 46.7% water | some haze | still some haze and entire bottom and part of sides covered with fine tar specs |
| | | | |
| 0.25 | 43.7% water | clear & clean | clear & clean |
| | | | |
| 0.25 | 44.7% water | some haze | still haze but not much settled tar- definitely a very fine coating of solids on glass |
| | | | |
| 0.25 | 45.7% water | less haze | less hazy but some small tar specs observable on bottom-now they are sticking to glass especially around rim |

| | | | |
|---|---|---|---|
| (1) for both SLS and DDBSA | | | |
| (2) ISS formula limits maximum water to 43.3wt % of the ISS. | | | |

ISS made with normal components while reducing the smoke content and increasing the water content achieve the stated total water content. This experiment verifies the ability of the surfactant additions to stabilize the smoke ISS against tar-out at high water levels compared to a target of 43.3 wt%. It was found that the high surfactant level stabilizes the composition at higher water levels. All ISS foam on shaking.

### Example 5. - Efficacy of Other Types of Surfactants

A series of other surfactants were added to the 44.7 wt % water content ISS at a total of 1 wt % to compare effectiveness to the combination of 0.5 wt % of each of SLS and DDBSA.

**TABLE 6 -**

| Various Types of Surfactants | | | |
|---|---|---|---|
| Surfactant Type | Solubility in mix | Tar-out | Comments |
| | | | |
| Sucrose Esters (Ryoto) | | | |
| S 370 | not soluble | heavy solids on bottom | Various HLB nonionics not effective |
| S 770 | soluble | heavy solids on bottom | |
| S 1170 | soluble | heavy solids on bottom | |
| S 1570 | soluble | heavy solids on bottom | |
| cetyl trimethyl ammonium chloride | soluble | very heavy liquid phase on bottom | cationic not effective |
| Mazu DF210S | soluble | hazy separated phases-some tars | anti foam not effective |
| Centromix E (lecithin) | soluble | near clear-slight liquid phase tar separation | zwitterionic partially effective |
| Tween 80 | soluble | very heavy liquid phase on bottom | nonionic not effective |
| Aerosol OT | soluble | hazy with fine solids, some settling but not stuck to bottom | anionic partially effective |

As shown above, only the anionic Aerosol OT and the Centromix E, a lecithin, which has some anionic properties, showed any positive activity against tarring-out.

### Example 6. - Color Transfer

The measurement of color is done using the Hunter L, a, b standard color scale, which is described in the below. The following test method was used in the following examples.

### L, a, b Test

Hunter L, a, b values are standard color scale values that indicate differences in brightness, hue and saturation using a standard color system which relates lightness as L values, and hue and croma as a combination of a and b values on a coordinate scale, where a represents redness-greenness and b represents yellowness-blueness.
- L values describe the degree of darkness, where a value of 100 equals white and that of 0 equals black.
- a-values describe the degree of redness, which increases with an increasing a-value.
- b-values describe the degree of yellowness, which increases with increasing b-value.
L, a, b and opacity theory and measurement are further described in the Instruction Manual Hunter Lab 45°/0° D25-PC2ΔColorimeter, pp. 1-1 through index-5. (Hunter Associates Laboratory, Inc., April, 1988). Hunter L, a, b and color scale values and opacity may be measured by the following tests.

Encased or peeled frankfurters may be tested as is. L, a, b values and opacity are measured using a colorimeter such as a Hunter D25-PC2Δ colorimeter available from Hunter Associate Laboratory, Inc. of Reston, Virginia, U.S.A. or the Color Machine Model 8900 available from Pacific Scientific.

Samples are placed on the sample plane of the colorimeter (which is calibrated using standard tiles according to the manufacturer's instructions) where a 45° incident light from a quartz-halogen lamp (clear bulb) illuminates the sample. An optical sensor placed at 0° (perpendicular to the sample plane) measures the reflected light which is filtered to closely approximate CIE 2° Standard Observer for Illuminant C. Values are reported using a standard Hunter L, a, b color scale.

Sausage sample placement is accomplished as follows. The sausage is held in close contact against the sample port that is equipped with a sample port insert having an appropriately sized aperture. The aperture should be no larger than the area to be sampled, typically a circular opening about 0.5 inches in diameter. L, a, b values are measured. Three measurements per frankfurter are made and five frankfurters are tested.

The invention will become clearer when considered together with the following examples which are set forth as being merely illustrative of the invention and which are not intended, in any manner, to be limitative thereof. Unless otherwise indicated, all parts and percentages are by weight.

### Stuffing, Color and Peeling Tests

Various shirred sausage casings were made using the compositions described in the examples below. The clear positive control casing was a small diameter cellulose casing having a peeling aid which is marketed under the trademark E-Z PEEL NOJAX® Casing by Viskase Corporation, Willowbrook, Illinois, USA.

Commercially produced, nonfibrous, small diameter casings of regenerated cellulose made from viscose were used to prepare all of the casings of these examples, known as NOJAX® casing, made by Viskase Corporation. The casings were coated by spraying the internal surface of the casing with the formulations from the examples below while shirring of the casing was taking place. The finished casings were used as shirred sticks of casing.

These test shirred sticks of casing were stuffed with meat emulsions on a high speed FAM mechanical stuffer, which formed individual links as the casings were stuffed. The links of sausages were processed as they would be in a commercial manufacturer's factory, using heat, humidity, and cook cycle times consistent with processing a meat emulsion product, unless described differently in the example. Once the links were finished cooking, the casing was then slit by hand and the links released. The links were tested for L, a, b values.

### A. Shirring Solution Containing Liquid Smoke

A series of upper range, small diameter, cellulose casings impregnated (loaded) with shirring solutions having the following liquid smoke concentration were prepared, including partially neutralized liquid smoke having an initial pH of 5.0. The measurements are in terms of the casing loading in mg/100in² and weight % (wt.%):

**Table 7 -**

| Liquid Smoke Containing Shirring Solutions | | |
|---|---|---|
| Ingredients | mg/100 in^{2**} | wt % |
| | | |
| DI Water | 123.75 | 13.75 |
| Liquid Smoke* | 749.25 | 83.26 |
| Carboxymethyl cellulose 7LF | 5.04 | 0.56 |
| Sodium dihydrogen phosphate monohydrate | 2.7 | 0.30 |
| sodium erythorbate monohydrate | 0.9 | 0.10 |
| Slip Ayd SL535E | 17.37 | 1.93 |
| Tween 80 | 0.9 | 0.10 |
| Total | 899.91 | 100.0 |

| | | |
|---|---|---|
| *Falls within the parameters of the inventive liquid smoke | | |
| **1mg/100in² = 0.155mg/100cm² | | |

### B. Experimental Procedure

Three sets of sausages were processed in three different lots of casing which were prepared with the shirring solutions as described above, according to the procedure given below. Control samples of clear casing were also used (casing without the inventive liquid smoke system coating). A composition comprising substantially pork and beef was emulsified and then stuffed into the casings using a mechanical stuffing apparatus. After stuffing, the links were processed according to the schedule below.

**Table 8 -**

| Thermal Processing | | | | | |
|---|---|---|---|---|---|
| Step | Dry Bulb °C (°F) | Wet Bulb °C (°F) | Relative Humidity (%) | Time (min.) | Cook Cycle |
| Cook Zone 1 | 60 (140) | 37 (99) | 25 | 5 | Cook |
| Cook Zone 2 | 66 (150) | 41 (106) | 24 | 6 | Cook |
| Cook Zone 3 | 71 (160) | 46 (114) | 25 | 6 | Cook |
| 4 | 77 (170) | 49 (121) | 25 | 6 | Cook |
| 5 | 82 (180) | 53 (128) | 25 | 45 | Shower |
| 6 | ambient water temp | | | 115 | cold tap water shower |

Standard clear (non-smoke containing) casing was processed according to the same conditions except that for one set of sausages, the drenched control, the stuffed links were hung in a smoke showering cabinet and drenched for 1 minute with the inventive liquid smoke (the same as used in the shirring solution above), having an initial pH of 5.0, at a 100% concentration. The amount of liquid smoke loading on the processed casing was not able to be determined in these controls. This was a greater concentration than that typically used in commercial applications.

The final products were soaked in cold water, hand peeled, and the L, a, and b colorimetric values were obtained immediately after peeling using the Pacific Scientific Color Machine. An average value was determined for each condition with the average taken from the readings on fifteen processed sausages.

Results of colorimetric testing are given in Table 9 below.

**Table 9 -**

| Colorimetric Values | | | | |
|---|---|---|---|---|
| Test # | Loading | L | a | b |
| 1 | 0 | 52.74 | 15.54 | 13.62 |
| | 900 | 47.36 | 16.68 | 17.51 |
| 2 | 0 | 47.60 | 15.78 | 12.39 |
| | 900 | 45.03 | 17.08 | 15.92 |
| | unknown (drenched control) | 42.00 | 18.36 | 15.88 |
| 3 | 0 | 51.44 | 16.05 | 13.64 |
| | 900 | 44.51 | 16.86 | 16.80 |

As the above data shows, sausages produced in the clear control casing were the lightest, least red, and least yellow colored. The darkest and most red colored sausages were made in the clear casings that were drenched in 100% liquid smoke, and the sausages produced by the nonfibrous casings containing the inventive liquid smoke composition as part of the shirring solution are darker, redder and have more yellow coloring than do the clear controls, and are lighter and less red than the drenched controls, but have about the same yellow coloring as do the drenched controls.
Therefore, the liquid smoke color was shown to transfer from the treated casing to the surface of the sausages, producing a more acceptable sausage.

### Example 7. Smoke Loading.

Two smaller small-sized diameter, nonfibrous cellulose casings were processed with ISS as described in Ex. 1, but the ISS were composed of the following mixtures, and different levels of the ISS was applied to the casings. The highest level was 100% and the lowest level was 80% of the contained smoke load in Ex. 1. The measurements are in terms of the casing loading in mg/100in² and wt%:

**Table 10. -**

| ISS Formulation and Loading - Size 23 Y | | | | |
|---|---|---|---|---|
| ISS ingredients | 100% Load in mg/100in² ** | Wt% | 80% load in mg/100in²** | Wt% |
| | | | | |
| DI water | 148 | 18.2 | 175 | 24.67 |
| CMC 7LF | 5.04 | 0.62 | 5.04 | 0.71 |
| NaH₂PO₄.H₂O | 2.7 | 0.33 | 2.7 | 0.38 |
| Sodium Erythorbate H₂O | 0.9 | 0.11 | 0.9 | 0.13 |
| Liquid Smoke* | 648.17 | 79.72 | 518.53 | 73.10 |
| SLS | 4.1 | 0.5 | 3.6 | 0.51 |
| DDBSA | 4.1 | 0.5 | 3.6 | 0.51 |
| Total | 813.01 | 100.00 | 709.37 | 100.00 |

| | | | | |
|---|---|---|---|---|
| * = The liquid smoke used in this example is a low water version of the liquid smoke used in Ex. 6. | | | | |
| **1mg/100in² = 0.155mg/100cm² | | | | |

**Table 11. -**

| ISS Formulation and Loading - Size 19N | | | | |
|---|---|---|---|---|
| ISS ingredients | 100% Load in mg/100in² ** | Wt% | 80% load in mg/100in² ** | Wt% |
| | | | | |
| DI water | 100 | 13.08 | 124 | 18.85 |
| CMC 7LF | 5.04 | 0.66 | 5.04 | 0.77 |
| NaH₂PO₄.H₂O | 2.7 | 0.35 | 2.7 | 0.41 |
| Sodium Erythorbate H₂O | 0.9 | 0.12 | 0.9 | 0.14 |
| Liquid Smoke* | 648.17 | 84.79 | 518.53 | 78.83 |
| SLS | 3.8 | 0.5 | 3.3 | 0.5 |
| DDBSA | 3.8 | 0.5 | 3.3 | 0.5 |
| Total | 764.41 | 100.00 | 657.77 | 100.00 |

| | | | | |
|---|---|---|---|---|
| * = The liquid smoke used in this example is a low water version of the liquid smoke used in Ex. 6. | | | | |
| ** 1mg/ 100in² = 0.155mg/100cm² | | | | |

These casings were processed under standard stuffing and cookhouse conditions along with a clear control as in Ex. 6., but without liquid smoke drenched samples, to prepare cooked frankfurters which exhibited the following properties.

**Table 12. -**

| Color Test | | | | |
|---|---|---|---|---|
| Casing Size | ISS Loading | L | a | b |
| | | | | |
| 23Y | 0 | 55.03 | 14.08 | 13.14 |
| | 709 | 51 | 15.15 | 17.17 |
| | 813 | 50.76 | 15.33 | 17.37 |
| | | | | |
| 19N | 0 | 56.03 | 13 | 12.91 |
| | 658 | 52.12 | 14.7 | 16.74 |
| | 764 | 50.75 | 15 | 17.17 |

These results indicate that the changes in color values are dependent on liquid smoke load and that these desirable colors can be achieved at lower total ISS loading on the casing using the inventive liquid smoke and smaller sized casings.

## Claims

1. A liquid smoke composition comprising a) a liquid smoke having a dilutable tar content of from greater than 1.0 wt % to 9.0 wt %, a pH greater than 4.5, a Karl Fischer per cent moisture of from 20 to 34 wt %, a staining index of greater than 140, b) at least one anionic surfactant, and optionally c) a wax.

2. A liquid smoke composition according to claim 1, wherein the dilutable tar content ranges from 2.9 to 5 wt.%.

3. A liquid smoke composition according to claim 1 or claim 2, wherein the pH is from 5.0 to 5.4

4. A liquid smoke composition according to any preceding claim, wherein the surfactant is sodium lauryl sulfate.

5. A liquid smoke composition according to any preceding claim, wherein the surfactant is dodecyl benzene sulfonate.

6. A method of manufacturing nonfibrous casing, wherein the casing is made from a viscose solution that is extruded as a tube into a coagulation and regenerating bath, thereby producing a cellulosic tube in a gel state, which gel tube is ultimately dried, the method comprising applying to the interior of the dried casing a liquid smoke composition as claimed in any preceding claim.

7. A method of manufacturing nonfibrous casing according to claim 6, wherein the casing is multilayer and contains either an inner layer of nylon or plastic or an outer layer of nylon or plastic.

8. A casing comprising a nonfibrous cellulosic casing containing on its interior surface a liquid smoke composition as claimed in any one of claims 1 to 5.

9. A casing according to claim 8, wherein the casing is multilayer and contains either an inner layer of nylon or plastic or an outer layer of nylon or plastic.

10. A casing comprising a nonfibrous nylon or plastic casing containing on its interior surface a liquid smoke composition as claimed in any one of claims 1 to 5.
